# EUROPEAN PATENT APPLICATION

(11) **EP 4 682 358 A1**
(43) Date of publication of application: **21.01.2026**
(21) Application number: 23927373.3
(22) Date of filing: 13.03.2023
(51) Int. Cl.: F01N 3/18, B60W 20/16, H02P 9/04

(54) **TRANSPORTATION VEHICLE**

(71) Applicant: Hitachi Construction Machinery Co., Ltd., Tokyo 110-0015 (JP)
(72) Inventor: AKIMOTO, Hiroki, Tsuchiura-shi, Ibaraki 300-0013 (JP); KIMURA, Takuya, Tsuchiura-shi, Ibaraki 300-0013 (JP); ITAI, Yudai, Tsuchiura-shi, Ibaraki 300-0013 (JP); OUE, Tsuyoshi, Tsuchiura-shi, Ibaraki 300-0013 (JP)
(74) Representative: MERH-IP Matias Erny Reichl Hoffmann Patentanwälte PartG mbB
(86) International application number: PCT/JP2023/009711
(87) International publication number: WO 2024/189751

(57) **Abstract**

A transportation vehicle capable of realizing a cleaning function of an exhaust gas purifying device while suppressing increase in the weight and costs. The transportation vehicle comprises: a diesel engine; a generator; a traveling motor; a grid box that converts the electric power generated by at least one of the generator or the traveling motor into heat to consume the electric power; an exhaust gas purifying device, and a controller configured to, in a case of causing the generator to generate load necessary to increase a temperature of the exhaust gas to a cleaning temperature, if determining that additional electric power additionally generated by the generator can be consumed by the grid box, cause the generator to additionally generate the additional electric power to remove the harmful substances deposited on the exhaust gas purifying device, and causes the grid box to additionally consume the additional electric power.

## Description

### TECHNICAL FIELD

The present invention relates to a transportation vehicle equipped with an exhaust gas purifying device.

### BACKGROUND ART

There has been known a conventional dump truck including a diesel engine, a generator that generates electric power using driving force of a diesel engine, traveling motors that generate driving force for rotating tires using the electric power generated by the generator and also generate electric power through braking of the tires, and a grid box that converts the electric power generated by the traveling motors into heat to consume the electric power (for example, see Patent Literature 1).

For complying with the recent exhaust gas regulations for diesel engines, it is necessary to provide a dump truck with an exhaust gas purifying device for removing harmful substances such as particulate matter (PM) and nitrogen oxide (NOx) contained in the exhaust gas (see, for example, Patent Literature 2). However, the particulate matter (PM) thus removed or hydrocarbon (HC) caused by driving of the diesel engine at low load, if being deposited on the exhaust gas purifying device, may cause malfunctions.

For this problem, Patent Literature 3 proposes a method of cleaning an exhaust gas purifying device (so-called, regeneration process) by generating electric power by means of a generator connected to an engine to increase an engine load and thus increase the temperature of exhaust gas so that deposits can be burnt. The electric power generated in this process is stored in a battery. Furthermore, Patent Literature 4 proposes a method of causing a resistor installed inside a muffler to consume the electric power generated by a generator for cleaning.

### CITATION LIST

### PATENT LITERATURE

Patent Literature 1: JP-B-6438273
Patent Literature 2: JP-B-5864036
Patent Literature 3: JP-B-7005389
Patent Literature 4: WO2020/091750

### SUMMARY OF INVENTION

### TECHNICAL PROBLEM

However, in the method according to Patent Literature 3, an extra battery for storing the electric power generated during cleaning has to be mounted, which may lead to increase in the weight and costs. Furthermore, in the method according to Patent Literature 4, installing the resistor inside the muffler causes increase in the weight and costs of the muffler, and also lead to thermal damages to the resistor caused by the exhaust gas with high-temperature.

The present invention has been made in view of the problems described above, and an object thereof is to provide a transportation vehicle capable of realizing a cleaning function of an exhaust gas purifying device while suppressing increase in the weight and costs.

### SOLUTION TO PROBLEM

In order to achieve the object described above, the present invention provides a transportation vehicle comprising: a diesel engine; a generator that generates an electric power using a driving force of the diesel engine; a traveling motor that generates a driving force for rotating a tire using the electric power generated by the generator, and generates an electric power through braking of the tire; a grid box that converts the electric power generated by at least one of the generator or the traveling motor into heat to consume the electric power; and a controller configured to control the diesel engine, the generator, and the traveling motor, wherein the transportation vehicle further comprises an exhaust gas purifying device that removes harmful substances contained in an exhaust gas generated from the diesel engine, and the controller is configured to: in a case of causing the generator to generate a load necessary to increase a temperature of the exhaust gas to a cleaning temperature, determine whether an additional electric power additionally generated by the generator can be consumed by the grid box; and in a case of determining that the additional electric power can be consumed by the grid box, cause the generator to additionally generate the additional electric power to remove the harmful substances deposited on the exhaust gas purifying device, and causes the grid box to additionally consume the additional electric power.

### ADVANTAGEOUS EFFECTS OF INVENTION

According to the present invention, it is possible to realize a cleaning function of an exhaust gas purifying device while suppressing increase in the weight and costs. The problems, configurations, and advantageous effects other than those described above will be clarified by the explanation of the embodiments below.

### BRIEF DESCRIPTION OF DRAWINGS

[FIG. 1] FIG. 1 is a side view of a dump truck.
[FIG. 2] FIG. 2 is a perspective view of a dump truck.
[FIG. 3] FIG. 3 is a top view of a vehicle body frame.
[FIG. 4] FIG. 4 illustrates the inside of a cab.
[FIG. 5] FIG. 5 is a circuit diagram of a drive circuit mounted on a dump truck.
[FIG. 6] FIG. 6 is a hardware configuration diagram of a dump truck.
[FIG. 7] FIG. 7 illustrates a flowchart of cleaning processing according to the first embodiment.
[FIG. 8] FIG. 8 illustrates a flowchart of cleaning processing according to the second embodiment.

### DESCRIPTION OF EMBODIMENTS

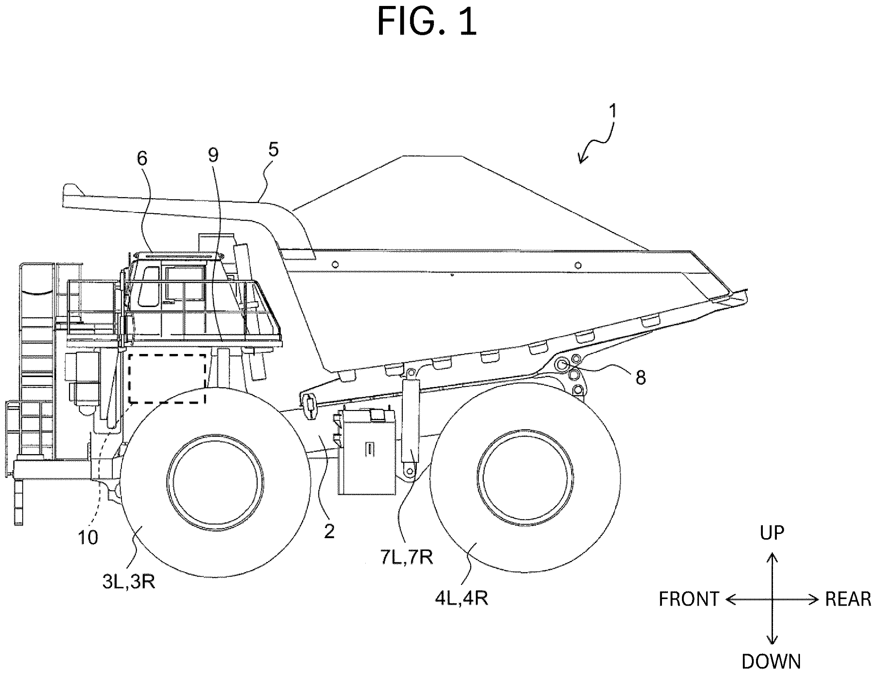

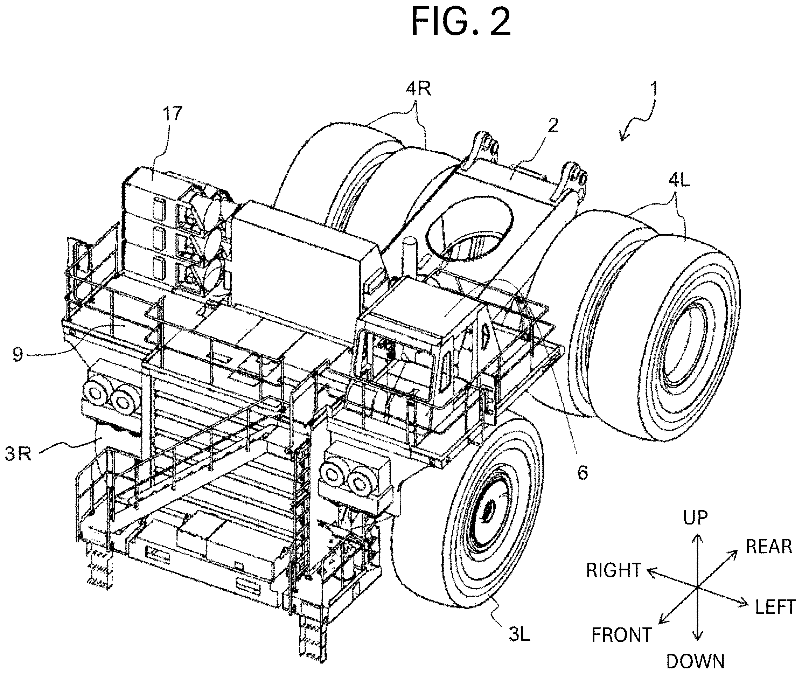

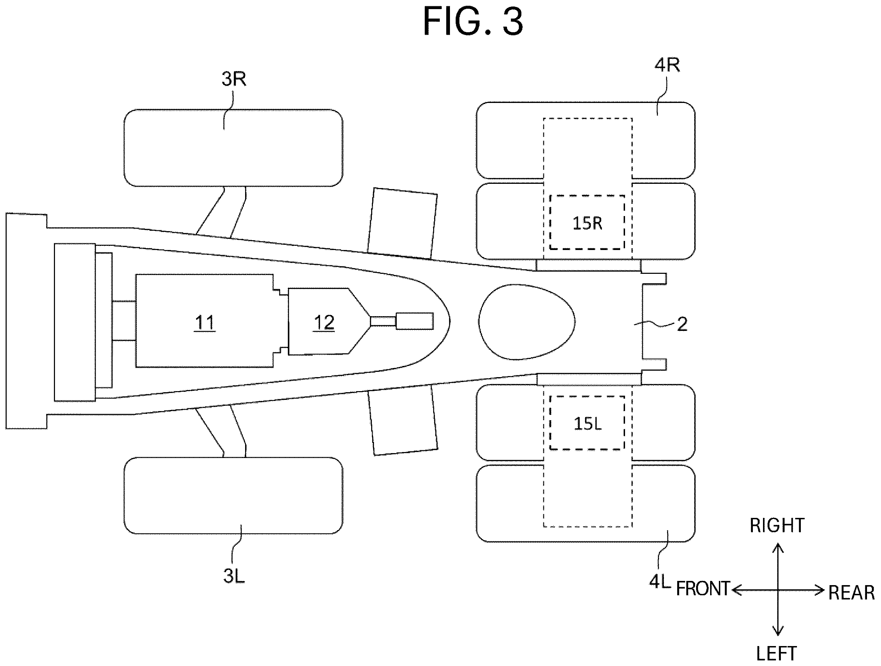

The embodiments of a transportation vehicle according to the present invention will be described with reference to the drawings. FIG. 1 is a side view of a dump truck 1. FIG. 2 is a perspective view of the dump truck 1. FIG. 3 is a top view of a vehicle body frame 2. The front, rear, left, and right are referred herein based on the viewpoint of an operator who boards and operates the dump truck 1 unless otherwise specified. A specific example of a transportation vehicle is not limited to the dump truck 1, but may be a wheel loader or the like.

### [Structure of dump truck 1]

As illustrated in FIG. 1 to FIG. 3, the dump truck 1 according to the present embodiment mainly includes the vehicle body frame 2 (vehicle body), a pair of front tires 3L, 3R rotatably supported at both the left and right ends of a front portion of the vehicle body frame 2, a pair of rear tires 4L, 4R rotatably supported at both the left and right ends of a rear portion of the vehicle body frame 2, a vessel 5 supported on the vehicle body frame 2 so as to be capable of rising and falling, and a cab 6 allowing an operator who operates the dump truck 1 to get in.

The pair of front tires 3L, 3R is a steering wheel whose steering angle changes in accordance with a steering operation performed by an operator. On the other hand, the pair of rear tires 4L, 4R is a driving wheel that rotates in response to the driving force transmitted from traveling motors 15L, 15R. Providing the dump truck 1 with the pair of traveling motors 15L, 15R allows the driving force to be transmitted independently to each of the pair of rear tires 4L, 4R.

The vessel 5 rises and falls in the up and down direction around a hinge pin 8 provided on a rear portion of the vehicle body frame 2 in response to the extension and contraction of hoist cylinders 7L, 7R. In each of the hoist cylinders 7L, 7R, one end thereof is connected to the vehicle body frame 2 and the other end is connected to the vessel 5, and each of the hoist cylinders 7L, 7R extends and contracts upon being supplied with hydraulic oil from a hydraulic pump (not illustrated). Extension of the hoist cylinders 7L, 7R causes the vessel 5 to rise, and contraction of the hoist cylinders 7L, 7R causes the vessel 5 to fall down.

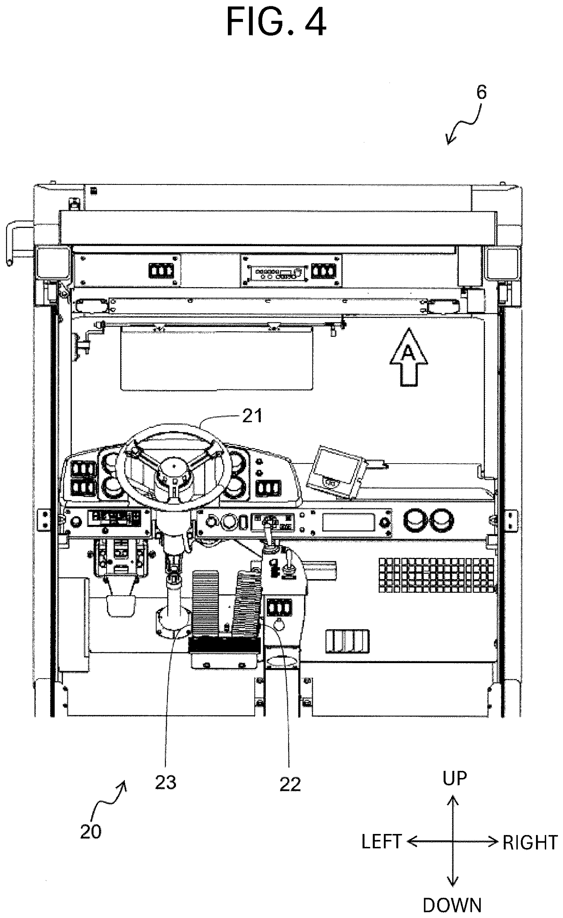

The cab 6 is placed on the left end of a deck 9 provided on a front end portion of the vehicle body frame 2. The cab 6 serves as an operator's room allowing an operator who operates the dump truck 1 to get in. The cab 6 is provided its inside with an operation device 20 (see FIG. 4) for operating the dump truck 1. The operator who is getting on the cab 6 operates the operation device 20, and in response to this operation, the dump truck 1 travels (accelerates, brakes, turns) and the vessel 5 rises and falls.

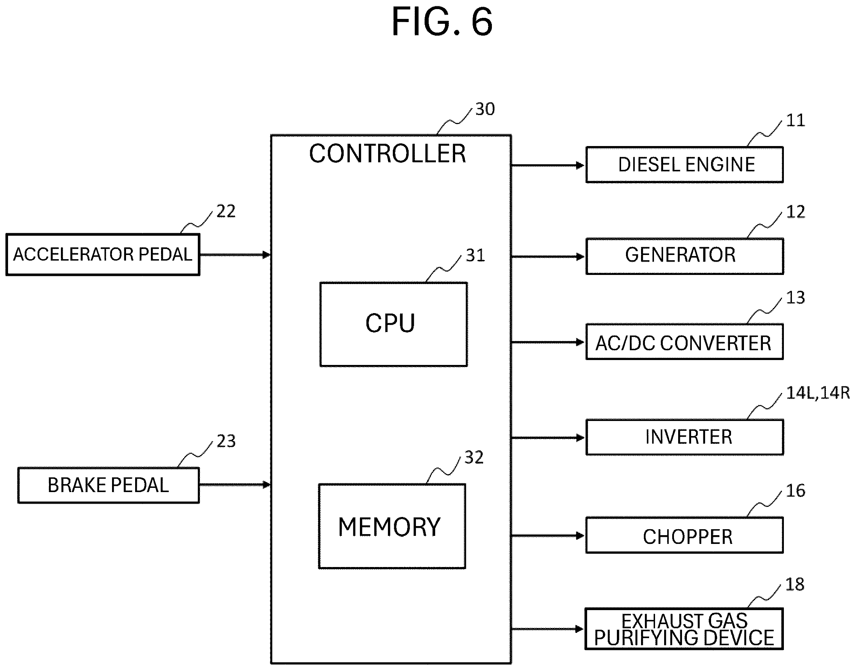

FIG. 4 illustrates the inside of the cab 6. The operation device 20 includes, for example, a steering wheel 21, an accelerator pedal 22, and a brake pedal 23 which are illustrated in FIG. 4, and further includes a travelling lever, a hoist lever, and the like. The operation device 20 outputs an operation signal corresponding to the operation performed by the user to a controller 30 (see FIG. 6), which will be described later.

The steering wheel 21 is an operation device for providing the direction in which the dump truck 1 is to turn. The accelerator pedal 22 is an operation device for providing an instruction to accelerate the dump truck 1. The brake pedal 23 is an operating device for providing an instruction to brake the dump truck 1 (rear tires 4L, 4R). The traveling lever is an operation device for indicating the direction in which the dump truck 1 is to travel (forward position, reverse position, neutral position) when the accelerator pedal 22 is stepped on. The hoist lever is an operation device for providing an instruction to raise and lower the vessel 5 (rising position, falling position).

As illustrated in FIG. 1, the dump truck 1 includes a drive circuit 10 for driving the dump truck 1. Among the components of the drive circuit 10, a diesel engine 11, a generator 12, and an exhaust gas purifying device 18 are mounted on the vehicle body frame 2, the traveling motors 15L, 15R are mounted on a rear axle, and an AC/DC converter 13, inverters 14L, 14R, a chopper 16, and a grid box 17 are placed on the deck 9.

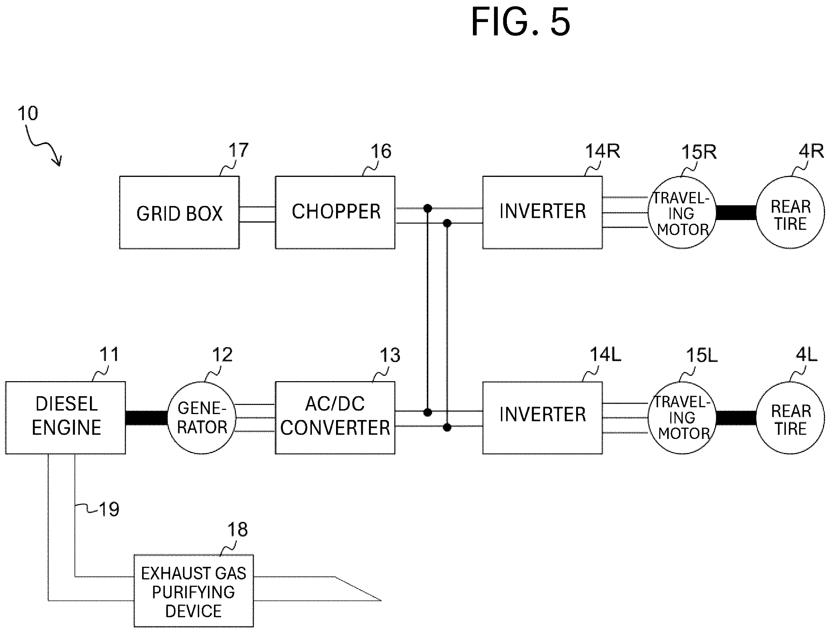

FIG. 5 is a circuit diagram of the drive circuit 10 mounted on the dump truck 1. The drive circuit 10 mainly includes, for example, the diesel engine 11, the generator 12, the AC/DC converter 13, the inverters 14L, 14R, the traveling motors 15L, 15R, the chopper 16, the grid box 17, and the exhaust gas purifying device 18.

The diesel engine 11 burns fuel (gas oil) to generate driving force for driving the dump truck 1. The generator 12 is connected to an output shaft of the diesel engine 11. The generator 12 generates three-phase AC power using the driving force transmitted from the diesel engine 11. The AC/DC converter 13 converts the three-phase AC power output from the generator 12 into DC power, and outputs it the inverters 14L, 14R and the chopper 16.

The inverters 14L, 14R convert the DC power output from the AC/DC converter 13 into three-phase AC power, and output it to the traveling motors 15L, 15R. The traveling motors 15L, 15R are supplied with the three-phase AC power from the inverters 14L, 14R and generate driving force for rotating the rear tires 4L, 4R. Then, the driving force of the traveling motors 15L, 15R are transmitted to the rear tires 4L, 4R through a reduction drive (not illustrated), whereby the dump truck 1 travels (accelerates).

On the other hand, for braking the dump truck 1, the traveling motors 15L, 15R function as electric brakes. The traveling motors 15L, 15R functioning as electric brakes generate regenerative electric power and output it to the inverters 14L, 14R. The inverters 14L, 14R convert the three-phase AC regenerative electric power output from the traveling motors 15L, 15R into DC power, and output it to the chopper 16.

The chopper 16 supplies the electric power output from the AC/DC converter 13 and the inverters 14L, 14R to the grid box 17. The grid box 17 is a resistor that converts the electric power generated by at least one of the generator 12 and the traveling motors 15L, 15R into heat to consume the electric power.

The exhaust gas purifying device 18 is provided in the middle of a muffler 19 (exhaust pipe) for discharging the exhaust gas generated by the diesel engine 11 to the outside of the dump truck 1. The exhaust gas purifying device 18 includes one or both of a urea SCR (Selective Catalytic Reduction) for removing nitrogen oxides (NOx) contained in the exhaust gas flowing through the muffler 19 and a DPF (Diesel Particulate Filter) for removing particulate matter (PM) such as soot. The exhaust gas purifying device 18 may oxidize carbon monoxide and hydrocarbon contained in the exhaust gas flowing through the muffler 19 using an oxidation catalyst to remove them. Particulate matter (PM), nitrogen oxides (NOx), and hydrocarbon (HC) referred above are examples of the harmful substances contained in the exhaust gas.

The exhaust gas purifying device 18 (urea SCR system) removes nitrogen oxides (NOx) from the exhaust gas flowing through the muffler 19, and discharges the exhaust gas from which the nitrogen oxides has been removed to the atmosphere. More specifically, the exhaust gas purifying device 18 injects urea toward the exhaust gas flowing through the muffler 19 to decompose nitrogen oxides contained in the exhaust gas into water and nitrogen using ammonia. Furthermore, the exhaust gas purifying device 18 (DPF) collects particulate matter (PM, for example, soot) contained in the exhaust gas using a filter, and discharges the exhaust gas from which PM has been removed to the atmosphere.

FIG. 6 is a hardware configuration diagram of the dump truck 1. The dump truck 1 includes the controller 30. The controller 30 may include, for example, a DSC (Digital Signal Controller) for controlling the whole operations of the dump truck 1 and an ECU (Engine Control Unit) for controlling the drive of the diesel engine 11. However, these units herein are collectively referred to as "controller 30".

The controller 30 includes a CPU (Central Processing Unit) 31 and a memory 32. The memory 32 is configured with, for example, a ROM (Read Only Memory), a RAM (Random Access Memory), an HDD (Hard Disk Drive), or a combination thereof. The CPU 31 reads and executes the program codes stored in the ROM or HDD, whereby the controller 30 can implement the processes, which will be described later. The RAM is used as a work area for execution of the program by the CPU 31.

However, the specific configuration of the controller 30 is not limited thereto, and may be configured with hardware such as an ASIC (Application Specific Integrated Circuit), a FPGA (Field-Programmable Gate Array), or the like.

The controller 30 controls the diesel engine 11, the generator 12, the AC/DC converter 13, the inverters 14L, 14R, and the chopper 16 based on, for example, operation signals output from the operation device 20.

In response to the accelerator pedal 22 that has been stepped on, the controller 30 increases the rotational speed of the diesel engine 11, outputs the electric power generated by the generator 12 to the inverters 14L, 14R, and controls the inverters 14L, 14R to increase the rotational speed of the traveling motors 15L, 15R. The accelerator pedal 22 outputs an operation signal indicative of the amount in which it is stepped on (amount of acceleration). The controller 30 increases the rotational speed of the traveling motors 15L, 15R as the stepped-on amount indicated by the operation signal increases.

Furthermore, in response to the brake pedal 23 that has been stepped on, the controller 30 reduces the rotational speed of the diesel engine 11 and causes the traveling motors 15L, 15R to function as electric brakes. Still further, the controller 30 outputs regenerative electric power, which is generated by the traveling motors 15L, 15R while the brake is applied to the dump truck 1, to the chopper 16 via the inverters 14L, 14R. Then, the regenerative electric power generated by the traveling motors 15L, 15R is converted into heat and consumed by the grid box 17. The brake pedal 23 outputs an operation signal indicative of a stepped-on amount B (amount of braking). The controller 30 increases braking force (regenerative electric power) of the rear tires 4R, 4L as the stepped-on amount B indicated by the operation signal increases.

Furthermore, the controller 30 increases or decreases the amount of electric power generation of the generator 12 within the range of the maximum electric power generation determined depending on the rotational speed of the diesel engine 11. More specifically, the controller 30 causes the generator 12 to generate traveling electric power to be supplied to the traveling motors 15L, 15R and auxiliary electric power to be supplied to an auxiliary machine (not illustrated) mounted on the dump truck 1. The traveling electric power increases or decreases depending on, for example, the amount in which the accelerator pedal 22 is stepped on. The auxiliary electric power increases or decreases depending on the drive or stop of the auxiliary machine. Furthermore, the controller 30 causes the generator 12 to generate not only the traveling electric power and the auxiliary electric power, but also additionally generate additional electric power P_{L} or consumable electric power P_{R} in the cleaning processing which will be described later.

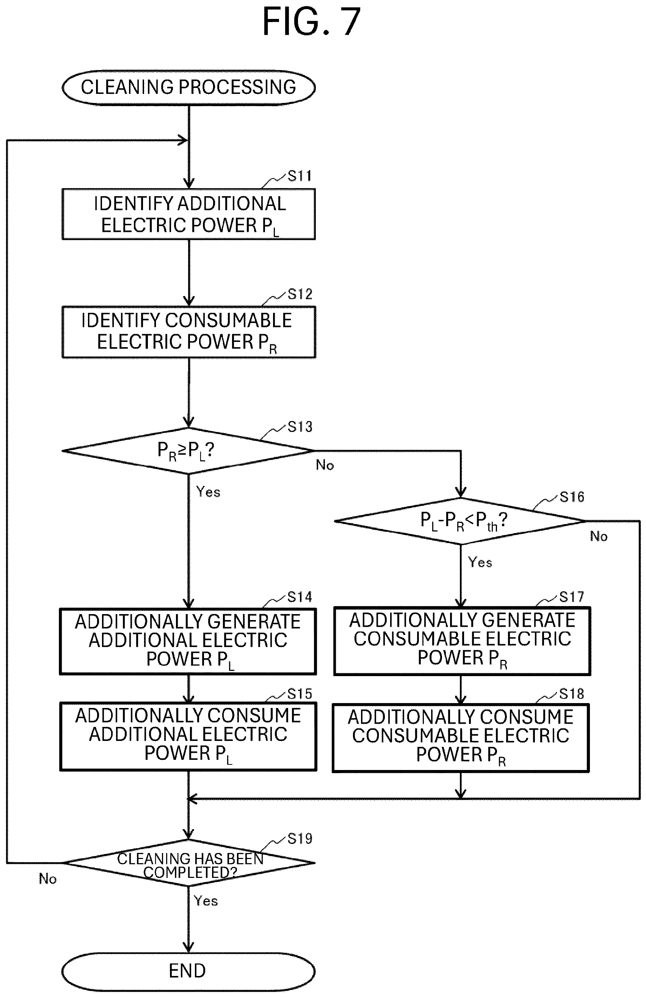

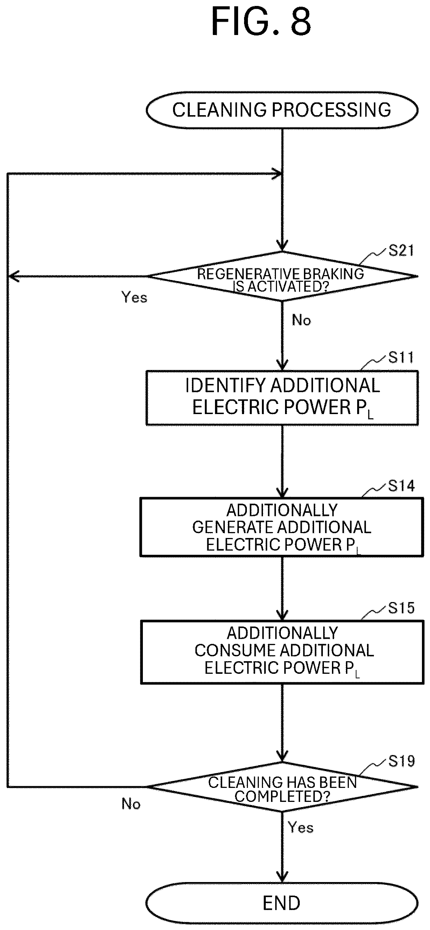

Still further, the controller 30 executes the cleaning processing illustrated in FIG. 7 or FIG. 8. The cleaning processing is the processing for removing hydrocarbon (HS) deposited on the exhaust gas purifying device 18 (urea SCR device). More specifically, hydrocarbon is caused by the drive of the diesel engine 11 at low load. The hydrocarbon as generated flows together with the exhaust gas through the muffler 19 and is deposited on the surface of the exhaust gas purifying device 18. The hydrocarbon thus deposited on the surface may cause malfunctions of the exhaust gas purifying device 18. Furthermore, the cleaning processing is processing for removing particulate matter (PM) deposited on the exhaust gas purifying device 18 (DPF). More specifically, PM (for example, soot) is caused by the drive of the diesel engine 11. The PM as generated flows together with the exhaust gas through the muffler 19 and is deposited on a filter portion of the exhaust gas purifying device 18. The PM thus deposited may cause malfunctions of the exhaust gas purifying device 18.

For these problems, in the cleaning processing, the controller 30 increases the temperature of the exhaust gas to remove hydrocarbon and the like deposited on the surface of the exhaust gas purifying device 18. The temperature of the exhaust gas increases in accordance with the increase in the load on the diesel engine 11. The load on the diesel engine 11 increases in accordance with the amount of electric power generated by the generator 12. Furthermore, increasing the rotational speed of the diesel engine 11 causes increase in the flow rate of the exhaust gas. For providing the flow rate of the exhaust gas necessary in the cleaning processing, the controller 30 may have an operator step on the accelerator pedal 22, or the controller 30 may adjust the rotational speed of the diesel engine 11.

The memory 32 holds a counter. The controller 30 counts up for the counter based on the condition that the temperature of the exhaust gas of the diesel engine 11 has been below a predetermined value for a predetermined period of time. On the other hand, the controller 30 counts down for the counter based on the condition that the temperature of the exhaust gas of the diesel engine 11 has been equal to or above the predetermined value for a predetermined period of time. Then, the controller 30 executes the cleaning processing in a timing that the value of the counter has exceeded a threshold value. Furthermore, the controller 30 resets the counter (substitutes 0) upon executing the cleaning processing.

### [Cleaning processing according to first embodiment]

FIG. 7 illustrates a flowchart of the cleaning processing according to the first embodiment. Firstly, the controller 30 identifies the additional electric power P_{L} which would be additionally generated by the generator 12 in the case of causing the generator 12 to generate the load necessary to increase the temperature of the exhaust gas of the diesel engine 11 to a cleaning temperature (S11). Furthermore, the controller 30 identifies the consumable electric power P_{R} that can be additionally consumed by the grid box 17 (S12). The additional electric power P_{L} and the consumable electric power P_{R} vary depending on the traveling state of the dump truck 1.

The cleaning temperature is a temperature of the exhaust gas necessary to remove hydrocarbon and the like deposited on the surface of the exhaust gas purifying device 18. The cleaning temperature is predetermined and stored in the memory 32. The additional electric power PL is obtained by subtracting the traveling electric power and the auxiliary electric power from necessary electric power, which is to be generated by the generator 12 for generating the load necessary to increase the temperature of the exhaust gas to the cleaning temperature. That is, necessary electric power = traveling electric power + auxiliary electric power + additional electric power P_{L}. Furthermore, in the case where the sum of the traveling electric power and the auxiliary electric power exceeds the necessary electric power (that is, the temperature of the exhaust gas has already reached the cleaning temperature), the additional electric power P_{L} is 0.

The consumable electric power P_{R} is obtained by subtracting regenerative electric power generated by the traveling motors 15L, 15R from the maximum electric power consumption which can be consumed by the grid box 17. That is, maximum electric power consumption = regenerative electric power + consumable electric power P_{R}. In the case where the traveling motors 15L, 15R are being driven by the electric power supplied from the generator 12 (that is, during power running), consumable electric power P_{R} = maximum electric power consumption. The maximum electric power consumption is greater than the necessary electric power.

Next, the controller 30 compares the additional electric power P_{L} identified in the immediately preceding step S11 with the consumable electric power P_{R} identified in the immediately preceding step S12 (S13). The process to be carried out in step S13 is an example of a process of determining, in the case where the generator 12 generates the load necessary to increase the temperature of the exhaust gas to the cleaning temperature (that is, the generator 12 generates the necessary electric power), whether the additional electric power P_{L} additionally generated by the generator 12 can be consumed by the grid box 17.

Next, the controller 30 determines that the grid box 17 can consume the additional electric power P_{L} in the case where the consumable electric power P_{R} is equal to or greater than the additional electric power P_{L} (S13: Yes). Then, the controller 30 causes the generator 12 to generate the additional electric power P_{L} (in other words, the generator 12 generates the necessary electric power) (S14). Thus, the temperature of the exhaust gas increases to the cleaning temperature, whereby hydrocarbon or the like deposited on the surface of the exhaust gas purifying device 18 is removed (cleaned). Furthermore, the controller 30 causes the grid box 17 to additionally consume the additional electric power P_{L} (S15). Still further, the controller 30 may prompt the operator to step on the accelerator pedal 22 using a notification device provided in the cab 6. Thus, the flow rate of the exhaust gas at the cleaning temperature increases.

On the other hand, the controller 30 determines that the grid box 17 cannot consume the additional electric power P_{L} in the case where the consumable electric power P_{R} is less than the additional electric power P_{L} (S13: No). Then, the controller 30 compares a difference between the additional electric power P_{L} and the consumable electric power P_{R} (P_{L}-P_{R}) with a threshold value Pₜₕ. The threshold value Pₜₕ is set to, for example, a value at which the temperature of the exhaust gas is allowed to increase to a temperature close to the cleaning temperature in the case where the generator 12 additionally generates the consumable electric power P_{R}.

Then, the controller 30 causes the generator 12 to additionally generate the consumable electric power P_{R} (S17) in the case where the consumable electric power P_{R} is less than the additional electric power P_{L}, and also the difference between the additional electric power P_{L} and the consumable electric power P_{R} is less than the threshold value Pₜₕ (S13: No & S16: Yes). Thus, the temperature of the exhaust gas increases to a temperature close to the cleaning temperature. Furthermore, the controller 30 causes the grid box 17 to additionally consume the consumable electric power P_{R} (S18). On the other hand, in the case where the consumable electric power P_{R} is less than the additional electric power P_{L}, and also the difference between the additional electric power P_{L} and the consumable electric power P_{R} is equal to or greater than the threshold value Pₜₕ (S13: No & S16: No), the controller 30 proceeds to step S19 without executing the processes of step S17 to S18.

Next, the controller 30 determines whether the cleaning of the exhaust gas purifying device 18 has been completed (S19). The controller 30 may determine that the cleaning has been completed, for example, based on the elapse of a predetermined period of time after the temperature of the exhaust gas detected by a temperature sensor (not illustrated) reaches the cleaning temperature. In the case of determining that the cleaning has not been completed yet (S19: No), the controller 30 executes the processes after step S11 again. In other words, the controller 30 repeatedly executes the process of step S11 to S18 until the cleaning is completed.

On the other hand, in the case of determining that the cleaning has been completed (S19: Yes), the controller 30 ends the cleaning processing. That is, the controller 30 causes the generator 12 to generate the traveling electric power and the auxiliary electric power, and causes the grid box 17 to consume the regenerative electric power.

According to the first embodiment, for example, the following advantageous operations and effects can be obtained.

According to the first embodiment, in the case where the consumable electric power P_{R} is equal to or more than the additional electric power P_{L} (S13: Yes), even if the generator 12 generates the load necessary to increase the temperature of the exhaust gas to the cleaning temperature (S14), the additional electric power P_{L} additionally generated by the generator 12 can be consumed by the grid box 17. Here, the grid box 17 is an existing equipment that has been conventionally mounted on the dump truck 1 for the purpose of consuming regenerative electric power, and thus utilizing the grid box 17 enables cleaning of the exhaust gas purifying device 18 while suppressing increase in the weight and costs.

Furthermore, according to the first embodiment, in the case where the consumable electric power P_{R} is less than the additional electric power P_{L} and a difference between the additional electric power P_{L} and the consumable electric power P_{R} is less than the threshold Pₜₕ (S13: No & S16: Yes), by causing the generator 12 to additionally generate the consumable electric power P_{R} (S17), the temperature of the exhaust gas can be brought close to the cleaning temperature although the cleaning cannot be executed immediately. With this configuration, the time necessary to increase the temperature of the exhaust gas to the cleaning temperature when the consumable electric power P_{R} reaches a sufficient level (for example, easing up the brake pedal 23 that has been stepped on) can be shortened.

On the other hand, in the case where the difference between the additional electric power P_{L} and the consumable electric power P_{R} is equal to or more than the threshold value Pₜₕ (that is, the consumable electric power P_{R} is small), even if the generator 12 additionally generates the consumable electric power P_{R}, the increase in the temperature of the exhaust gas will be limited. Accordingly, by skipping the processes of steps S17 to S18, reduction in the fuel efficiency can be prevented. However, the process of step S16 may be omitted. That is, the controller 30 may execute the processes of steps S17 to S18 in the case where the consumable electric power P_{R} is less than the additional electric power P_{L}.

### [Cleaning processing according to second embodiment]

FIG. 8 illustrates the cleaning processing according to the second embodiment. In the following, the details of the processes which are common to those of the first embodiment will not be explained while differences therebetween will be mainly described. The structure of the dump truck 1 according to the second embodiment is the same as that of the first embodiment. On the other hand, the cleaning processing according to the second embodiment differs from the first embodiment in the method of determining, in the case where the generator 12 generates the load necessary to increase the temperature of the exhaust gas to the cleaning temperature, whether the additional electric power P_{L} generated by the generator 12 can be additionally consumed by the grid box 17 (S21).

Firstly, the controller 30 determines whether the traveling motors 15L, 15R are generating regenerative electric power (in other words, whether the brake pedal 23 has been stepped on) (S21). In the case where the traveling motors 15L, 15R are generating the regenerative electric power (S21: Yes), the controller 30 waits for the execution of the processes after step S11. On the other hand, in the case where the traveling motors 15L, 15R are not generating the regenerative electric power (S21: No), the controller 30 determines that the additional electric power P_{L} can be consumed by the grid box 17, and executes the processes of steps S11 to S19.

According to the second embodiment, it is also possible to realize the cleaning of the exhaust gas purifying device 18 while suppressing increase in the weight and costs. Furthermore, the method of determining, in the case where the generator 12 generates the load necessary to increase the temperature of the exhaust gas to the cleaning temperature, whether the additional electric power P_{L} additionally generated by the generator 12 can be consumed by the grid box 17 is simplified more than that of the first embodiment, whereby the processing load of the controller 30 can be reduced.

The embodiments described above have been exemplified for explaining the present invention, but are not provided to limit the scope of the present invention thereto. Those skilled in the art can practice the invention in various other manners without deviating from the concept of the present invention.

### REFERENCE SIGNS LIST

- 1: dump truck
- 2: vehicle body frame
- 3L, 3R: front tire
- 4L, 4R: rear tire
- 5: vessel
- 6: cab
- 7L, 7R: hoist cylinder
- 8: hinge pin
- 9: deck
- 10: drive circuit
- 11: diesel engine
- 12: generator
- 13: AC/DC converter
- 14L, 14R: inverter
- 15L, 15R: traveling motor
- 16: chopper
- 17: grid box
- 18: exhaust gas purifying device
- 19: muffler
- 20: operation device
- 21: steering wheel
- 22: accelerator pedal
- 23: brake pedal
- 30: controller
- 31: CPU
- 32: memory

## Claims

1. A transportation vehicle comprising:
a diesel engine;
a generator that generates an electric power using a driving force of the diesel engine;
a traveling motor that generates a driving force for rotating a tire using the electric power generated by the generator, and generates an electric power through braking of the tire;
a grid box that converts the electric power generated by at least one of the generator or the traveling motor into heat to consume the electric power; and
a controller configured to control the diesel engine, the generator, and the traveling motor, wherein
the transportation vehicle further comprises an exhaust gas purifying device that removes harmful substances contained in an exhaust gas generated from the diesel engine, and
the controller is configured to:
in a case of causing the generator to generate a load necessary to increase a temperature of the exhaust gas to a cleaning temperature, determine whether an additional electric power additionally generated by the generator can be consumed by the grid box; and
in a case of determining that the additional electric power can be consumed by the grid box, cause the generator to additionally generate the additional electric power to remove the harmful substances deposited on the exhaust gas purifying device, and causes the grid box to additionally consume the additional electric power.

2. The transportation vehicle according to claim 1,
wherein
the controller is configured to:
identify the additional electric power and a consumable electric power that can be additionally consumed by the grid box; and
in a case where the consumable electric power is equal to or more than the additional electric power, determine that the additional electric power can be consumed by the grid box.

3. The transportation vehicle according to claim 2,
wherein
in a case where the consumable electric power is less than the additional electric power, the controller causes the generator to additionally generate the consumable electric power to increase the temperature of the exhaust gas, and causes the grid box to additionally consume the consumable electric power.

4. The transportation vehicle according to claim 3,
wherein
in a case where the consumable electric power is less than the additional electric power and a difference between the additional electric power and the consumable electric power is less than a threshold value, the controller causes the generator to additionally generate the consumable electric power to increase the temperature of the exhaust gas, and causes the grid box to additionally consume the consumable electric power.

5. The transportation vehicle according to claim 1,
wherein
in a case where the traveling motor is not generating the electric power, the controller determines that the additional electric power can be consumed by the grid box.
